# FASCICULE DE BREVET EUROPEEN

(11) **EP 3 586 221 B1**
(45) Date de publication et mention de la délivrance du brevet: **24.03.2021**
(21) Numéro de dépôt: 18701518.5
(22) Date de dépôt: 12.01.2018
(51) Int. Cl.: G06F 3/06

(54) **PROCÉDÉ, ÉQUIPEMENT ET SYSTÈME DE GESTION DU SYSTÈME DE FICHIERS**
DATEISYSTEMVERWALTUNGSVERFAHREN, -AUSRÜSTUNG UND -SYSTEM
FILE SYSTEM MANAGEMENT METHOD, EQUIPMENT AND SYSTEM

(30) Priorité: 24.02.2017 FR 1751471
(43) Date de publication de la demande: 01.01.2020
(73) Titulaire: MOORE, 75009 Paris (FR)
(72) Inventeur: POUPET, Paul, 92210 Saint-Cloud (FR); POILVE, Benjamin, 92210 Saint-Cloud (FR); LAMBERTZ, Robin, 92210 Saint-Cloud (FR); PELTIER, Pierre, 92210 Saint-Cloud (FR)
(74) Mandataire: IP Trust
(86) Numéro de dépôt international: PCT/FR2018/050070
(87) Numéro de publication internationale: WO 2018/154197

(56) Documents cités:
- US-A1- 2011 296 111
- US-A1- 2014 095 789
- US-A1- 2016 321 291

## Description

### Domaine de l'invention

La présente invention concerne le domaine du stockage de données hybride mettant en œuvre une ressource de stockage locale de capacité limitée présentant un faible temps d'accès aux données, et une ressource distante présentant une plus grande capacité mais un temps d'accès plus élevé, par exemple une ressource nuagique (« cloud en anglais ») ou une ressource sur un serveur distant auquel l'équipement client est relié par un réseau informatique ou encore un périphérique de stockage connecté.

L'équipement principal, par exemple un ordinateur, une tablette ou un téléphone (« smartphone » en anglais) est équipé de ressources de stockage telles qu'une ou plusieurs mémoires flash ou disques durs.

Les capacités de stockage local sont utilisées pour l'enregistrement de fichiers auquel l'utilisateur souhaite pouvoir accéder pour les lire ou les modifier, ainsi que des fichiers temporaires, par exemple des fichiers de cache évitant d'avoir à transférer de manière répétée des fichiers distants, ou encore des fichiers de travail transitoire.

Lorsque la mémoire locale est saturée, certaines applications peuvent présenter de graves disfonctionnements conduisant à la perte définitive de données de travail.

Il est donc usuel que le système de gestion de fichiers d'un équipement informatique gère la répartition des ressources de stockage local et distant afin d'optimiser le fonctionnements des applications exécutées sur un équipement informatique.

Il est alors nécessaire de prévoir un processus d'allocation des différentes ressources de stockage et d'accès aux données enregistrées sur différentes ressources, de manière souvent transparente pour l'utilisateur.

A titre d'exemple, la solution « FUSION DRIVE » (marque commerciale de la société APPLE) commande la répartition des données entre une ressource de type SSD de 128 Go et un disque dur dont la capacité peut dépasser le téraoctet. La gestion de ces deux ressources consiste à enregistrer par défaut les applications sur la mémoire SSD ainsi que les fichiers temporaires correspondant à ces applications, à réserver un espace libre de quelques gigaoctets sur la mémoire SSD pour l'enregistrement de fichiers cache. Lorsque le cache est plein, il « déborde » sur le disque dur, le système d'exploitation commandant l'enregistrement non plus sur la mémoire SSD mais sur le disque dur de plus grande capacité mais plus lent.

Par ailleurs, le système d'exploitation décide du déplacement de certains fichiers et de certaines données et applications du disque dur vers la mémoire SSD et inversement, en prévoyant que les données les plus fréquemment utilisées se retrouveront sur le SSD et les données les moins fréquemment utilisées restent sur le disque dur. Le fichier original n'est toutefois pas supprimé tant que la copie d'une ressource à l'autre n'est pas terminée, par mesure de sécurité. Une fois que cette opération est effectuée, le fichier original est supprimé.

Ces solutions apparaissent toutefois relativement simplistes et ne permettent pas une gestion optimale de l'allocation des ressources de stockage et ne permettent pas la gestion de ressources distantes.

### Etat de la technique

On a proposé dans l'état de la technique d'améliorer ces principes pour une gestion optimisée de ressources distantes « nuagiques ».

A titre d'exemple, le brevet US9223795 décrit une solution comprenant une interface avec au moins une application utilisateur pour une vue transparente par un module de système de gestion de fichiers et par un module client de stockage utilisateur mis en oeuvre dans un système de fichiers au niveau utilisateur, pour accéder et synchroniser au moins une ressource stockée dans un dispositif de support de stockage.

Ce procédé prévoit de traiter une demande depuis l'application de l'utilisateur, pour accéder à la ressource de système de fichiers par une succession de traitements :
- une requête pour accéder à la vue transparente comprend une pluralité d'opérations servant à manipuler les ressources stockées dans les dispositifs de support de stockage ;
- la réception, par le module client de stockage, d'une demande d'accès à la ressource à partir de l'application de l'utilisateur pour la vue transparente;
- la récupération, par un service de prédiction de stockage, de la demande d'accès à la ressource, dans lequel la requête comprend en outre des métadonnées associées à la demande de l'application de l'utilisateur, la récupération comprenant en outre le traitement de métadonnées associées à la demande utilisée pour identifier la ressource stockée dans le dispositif de support de stockage ;
- l'identification d'une demande supplémentaire pour accéder à une ressource supplémentaire stockée dans un dispositif de support de stockage supplémentaire;
- la réception, par un service de stockage en réseau, de la demande d'accès à la ressource comprenant en outre des métadonnées associées à la demande du service de prédiction de stockage utilisé pour monter le dispositif de support d'enregistrement;
- la fourniture d'un accès à l'application utilisateur, d'une vue transparente comprenant en outre l'accès aux ressources additionnelles stockées dans les dispositifs supplémentaires multimédias stockés.

Un autre exemple de solution connue est décrite dans le brevet US9323695 concernant un procédé de remplacement de cache prédictif pour déterminer quelles données doivent être supprimées d'une mémoire de cache d'accès à partir d'une arborescence des données construite dynamiquement.

Une autre solution est décrite dans le brevet US5305389 concernant un sous-système de mémoire cache géré à partir de prédictions basées sur des modèles d'accès stockés par un contexte. Un modèle d'accès est généré à partir des accès antérieurs d'un traitement du système de traitement de données dans un contexte similaire.

Au cours d'une séquence d'apprentissage, une trace d'accès à la mémoire est traitée pour déterminer des prédictions futures.

On connaît aussi la demande de brevet américain US2011296111 décrivant un système et un procédé pour une interface permettant d'accéder et de manipuler des données afin de permettre l'accès à des données sur un module de stockage sur un système basé sur un réseau. Les données sont présentées sous forme de disque virtuel pour le système local via une interface matérielle qui émule une interface de disque. Le système et le procédé intègrent des fonctionnalités pour améliorer les performances de récupération et de stockage de données fréquemment accédées telles que des informations de partition, des fichiers de système d'exploitation ou des informations de système de fichiers par l'utilisation de calculs de cache et de différence. Ce système et cette méthode peuvent être utilisés pour remplacer une partie ou la totalité du stockage fixe dans un dispositif. Le système et la méthode peuvent fournir un accès en ligne et hors ligne aux données.

### Inconvénients de l'art antérieur

Les solutions de l'art antérieur prennent généralement en compte le traitement en cours pour déterminer lors d'une requête d'accès à une donnée ou un fichier enregistré en mémoire le chemin d'accès, mais ne permettent pas d'anticiper un tel besoin d'accès à une donnée ou à un fichier pour permettre de redéfinir l'allocation entre les différentes ressources de stockage de sorte à assurer la disponibilité des fichiers sur la mémoire rapide locale au moment où une application a besoin de procéder à sa lecture ou à sa modification.

Il en résulte des temps d'accès longs lorsque la donnée ou le fichier n'est pas disponible localement, une consommation de bande passante élevée et parfois un disfonctionnement majeur, lorsque le réseau n'est pas disponible pour assurer le transfert d'une donnée ou d'un fichier nécessaire à la poursuite de l'exécution d'une application.

La solution proposée par la demande américaine US2011296111 est par ailleurs la mise en place d'un système d'accès de données permettant l'accès à un fichier en l'absence de réseau sans augmenter la mémoire disponible.

On connaît aussi la solution décrite dans la demande de brevet américaine US2016/321291 décrivant un procédé d'accès à un système de fichiers dans une plate-forme de stockage en nuage stockant un contenu partagé accessible sur un réseau par deux ou plusieurs dispositifs utilisateurs, comprenant:
- l'implémentation d'une interface de système de fichiers entre une plate-forme de stockage en nuage et un système de fichiers virtuel , dans lequel l'interface du système de fichiers dirige les appels de système de fichiers depuis une application s'exécutant sur l'un des dispositifs de l'utilisateur vers le système de fichiers virtuel;
- le traitement d'au moins certains des appels de système de fichiers reçus à l'interface de système de fichiers via un premier pipeline d'opérations comprenant un gestionnaire de données local qui envoie un ou plusieurs des appels de système de fichiers à un exécuteur de système de fichiers effectuant un traitement local événements; recevoir un événement de fichier du premier pipeline et initier le traitement de l'événement de fichier par un second pipeline comprenant au moins une première opération pour accéder aux métadonnées locales correspondant aux événements de fichier et une seconde opération pour accéder à un cache local pour identifier une partie d'un fichier dans le système de fichiers virtuel; et
- la fourniture d'au moins une identification du contenu du cache local à une interface de programmation d'application de stockage à distance pour initier une modification dans le système de fichiers de la plate-forme de stockage basée sur le cloud.

On connaît encore la solution décrite dans la demande de brevet américaine US2014/095789 concernant un système informatique pour la gestion de données. Un aspect comprend une méthode d'attribution de types de stockage à des données en fonction de la fréquence d'accès.

### Solution apportée par l'invention

Pour remédier à ces inconvénients, l'invention concerne selon son acception la plus générale un procédé de gestion du système de fichiers d'un terminal informatique disposant d'une mémoire locale, connecté à un réseau comprenant au moins un équipement de stockage distant, comportant des étapes de calcul périodique de l'adressage local ou distant d'un fichier numérique à enregistrer, à lire ou à modifier en fonction d'une loi recalculée périodiquement caractérisé en ce que
- Ladite étape de calcul de l'adressage est fonction de métadonnées présentes dans ledit fichier numérique à traiter, de l'historique d'accès dudit fichier à traiter et de l'arborescence locale des fichiers,
- Ladite loi est déterminée à partir d'une loi de référence, recalculée en tâche de fond, par des traitements fonction des usages de l'utilisateur, pour commander la recopie d'un fichier distant sur la mémoire locale avant la requête d'accès audit fichier, et à effacer les fichiers locaux dont ladite loi détermine un indicateur d'utilisation inférieur à une valeur seuil,
- Ladite loi de commande étant déterminée pour minimiser la volume des données transférées entre la mémoire locale et la mémoire distante et à minimiser le défaut de cache local,
- Et en ce que ledit procédé comporte des étapes exécutées en tâche de fond de recopie des fichiers enregistrés locaux sur l'équipement de stockage distant,
- Et en ce que les commandes de modification d'un fichier distant entraînent le téléchargement de la partie dudit fichier à modifier sur la mémoire locale, à déverrouiller la partie du fichier à modifier sur la mémoire locale, à modifier localement ladite partie du fichier à modifier, à verrouiller ladite partie du fichier et à resynchroniser le fichier distant avec le fichier local.

Avantageusement, ladite loi de commande en fonction des usages de l'utilisateur prend en compte un critère relatif à l'accessibilité dudit fichier hors connexion.

De préférence, l'arborescence des fichiers locaux et distants et la table d'indexation de la totalité des fichiers locaux et distants sont enregistrées dans la mémoire locale et en ce que le système d'exploitation comporte des moyens de visualisation transparent de l'arborescence.

Selon une variante, le procédé comporte des prétraitements en tâche de fond du fichier de log pour regrouper les informations de log selon un critère de proximité (vector embedding).

Selon une autre variante, le procédé comporte des prétraitements en tâche de fond de regroupement de fichiers sur un même espace de stockage en fonction d'un indicateur de distance vectorielle entre lesdits fichiers.

Avantageusement, lesdits prétraitements sont réalisés au moment du log, entraînement d'un réseau de neurone sur ces logs, et à partir d'un réseau pré-entraîné pour calculer un indicateur numérique correspondant à la probabilité d'utilisation future pour chacun des fichiers.

Selon une variante, l'adressage d'un fichier est déterminé par application d'un algorithme d'optimisation combinatoire appliqué audit indicateur numérique de probabilité d'utilisation et des caractéristiques de la mémoire locale et de la communication réseau.

L'invention concerne aussi un équipement informatique comprenant un processeur et une ou plusieurs mémoires locales, par exemple une mémoire flash ou un disque dur, associé à un circuit réseau (13), ainsi qu'une mémoire pour l'enregistrement d'un code commandant la gestion du système de fichiers conformément au procédé susvisé.

L'invention concerne encore un système constitué par au moins un serveur et au moins un équipement informatique comprenant un processeur et une ou plusieurs mémoires locales, par exemple une mémoire flash ou un disque dur, associé à un circuit réseau (13), ainsi qu'une mémoire pour l'enregistrement d'un code commandant la gestion du système de fichiers conformément au procédé susvisé.

### Description détaillée d'un exemple non limitatif de l'invention

La présente invention sera mieux comprise à la lecture de la description qui suit, concernant un exemple non limitatif de réalisation, et se référant aux dessins annexés où :
- la figure 1 représente une vue schématique de l'architecture matérielle d'un système selon l'invention
- la figure 2 représente une vue schématique de l'architecture fonctionnelle d'un système selon l'invention
- les figures 3 à 11 présentent des exemples de processus de traitement

### Contexte de l'invention

L'invention concerne un système de stockage mixte (cloud/physique) transparent pour l'utilisateur.

Le but est de proposer une solution complète permettant de stocker et de garder accessible une grande quantité de donnée, quantité excédant la capacité de stockage physique de l'équipement informatique utilisé, par exemple un téléphone cellulaire (« smartphone » en anglais) ou une clé USB.

L'invention repose sur les principes suivants :
- la virtualisation du système de fichier pour gérer de manière transparente les fichiers
- l'utilisation de la connexion réseau (par exemple internet) de l'équipement informatique local pour le stockage distant
- l'analyse des habitudes de l'utilisateur et des applications exécutées sur l'équipement informatique local afin de déterminer une priorité pour le fichier à stocker en local
- l'utilisation du stockage local comme cache d'accélération pour une rapidité équivalente à un système de de gestion de fichiers classique
- la conservation des métadonnées de tous les fichiers associés pour émuler leur présence aussi bien lorsque l'équipement informatique est connecté à internet que lorsque l'accès au réseau est impossible. Ces métadonnées peuvent être notamment des versions du fichier en qualité réduite ("thumbnail") ou compressées pour permettre un usage minimum du fichier.
- l'optimisation des transferts pour diminuer les coûts de bande passante.

Du point de vue de l'utilisateur, la capacité de stockage est infinie. Si l'équipement informatique est connecté à internet, tous les documents sont accessibles. Si l'équipement informatique n'est pas connecté à Internet, seuls les documents identifiés comme importants sont accessibles, les autres ne peuvent pas être ouverts, ou bien sont disponibles en qualité réduite, ou compressées.

Lorsque l'équipement informatique n'est pas connecté à Internet, tout ajout de document est géré localement.

S'il reste suffisamment de place sur l'espace de stockage propre, le document est simplement ajouté et tagué en vue de sa synchronisation ultérieure.

Sinon, l'espace de stockage local est libéré par la suppression des documents les moins souvent utilisés par l'utilisateur et les nouveaux documents sont ajoutés et tagués en vue de leur synchronisation ultérieure. L'utilisateur peut également taguer ses propres documents. Il peut ainsi forcer des documents à rester sur la ressource de stockage local, s'il sait qu'il va en avoir besoin. Les transferts de données entre l'équipement informatique et le nuage (« cloud ») son cryptés et le stockage dans le nuage est crypté et peut être verrouillé par mot de passe.

### Emulation du système de gestion de fichiers

Le stockage mixte est mis en place grâce à un logiciel lancé sur l'ordinateur hôte qui émule un système de fichiers (filesystem). Pour ce faire, le driver générique FUSE est utilisé.

Le système de fichiers (« filesystem ») est constitué de trois composantes :
1. Un métacache constitué par un fichier dans le stockage physique de l'équipement informatique, qui contient les métadonnées liées à chaque fichier. Le métacache est implémenté en base SQL.
2. Un accès à un nuage ou une ressource de stockage distante dans lequel sont stockés l'ensemble des fichiers du système de fichiers (« filesystem »).
3. Un cache local se trouvant dans le stockage physique de la clé, où sont stockés les fichiers que l'utilisateur voudra le plus probablement utiliser prochainement.

Lorsque l'équipement informatique est en ligne, tous les fichiers du système de fichiers (« filesystem ») sont accessibles. Si le fichier se trouve dans le cache local, il est accédé en priorité afin d'améliorer les performances.

Lorsque l'équipement informatique est hors-ligne, seuls les fichiers se trouvant dans le cache local sont disponibles.

### Architecture matérielle d'un système selon l'invention

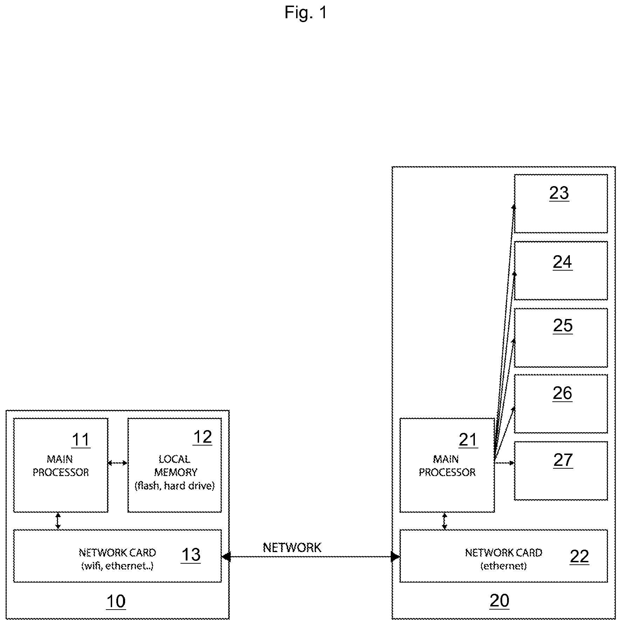

- La figure 1 représente une vue schématique de l'architecture matérielle du système

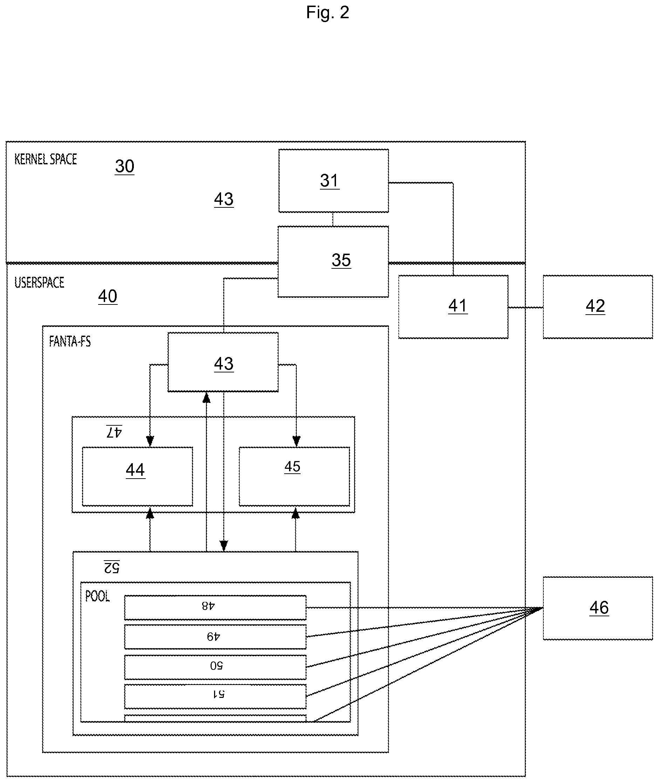

- La figure 2 représente une vue schématique de l'architecture fonctionnelle du système.

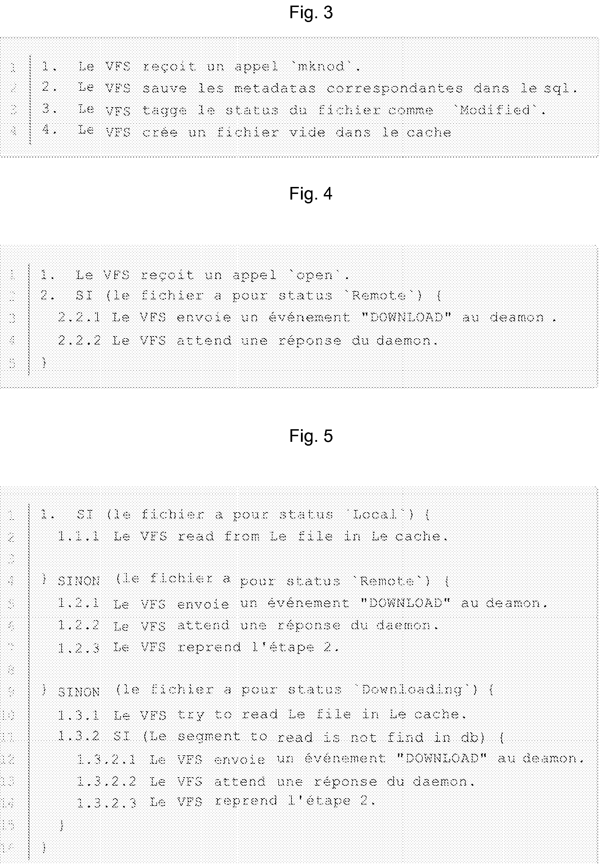

- Les figures 3 à 11 présentent des exemples de processus de traitement (thread)

### Description de l'architecture matérielle du système

Il est constitué d'un équipement informatique (10), par exemple une tablette, un ordinateur,... connecté via un réseau, par exemple internet, à un serveur (20).

L'équipement informatique (10) comprend un processeur (11) et une ou plusieurs mémoires locales (12), par exemple une mémoire flash ou un disque dur, associé à un circuit réseau (13), par exemple une carte réseau WIFI ou Ethernet.

Le serveur (20) comprend également un processeur (21) et une ou plusieurs mémoires locales (23 à 27), par exemple une mémoire flash ou un disque dur, associé à un circuit réseau (22), par exemple une carte réseau WIFI ou Ethernet.

### Algorithme de traitement de données

Le but de cette section est d'expliciter les traitements de donnée effectués pour servir au mieux l'usage utilisateur. Ces traitements ont deux buts :
- Déterminer les motifs d'utilisation de fichiers pour pouvoir prédire avec la plus grande précision les fichiers à stocker sur le cache local (dans le contexte d'utilisation hors ligne, mais aussi pour accélérer la responsivité du système)
- Arriver à déterminer des "groupes" de fichiers afin de proposer à l'utilisateur des classifications de fichier adaptées à son usage, mais aussi pour faire du pre-fetching de fichier pour améliorer les performances.

Ces traitements doivent s'effectuer avec un certain nombre de contraintes liées à l'application spécifique à savoir :
- Le besoin d'effectuer le traitement sur des données en continu (stream)
- La limitation de la quantité de données stockée concernant chaque fichier
- Un espace en changement continu (ajout/retrait de fichiers...)
- La limitation de puissance de calcul lié à ce processus

Ce processus repose sur des algorithmes de deep learning, en partant d'un modèle pré-entrainé qui va s'adapter aux usages spécifiques de l'utilisateur pour offrir une expérience optimale.

Cet algorithme repose d'une part sur la notion de clustering, utilisant les métadata pour arriver à créer des groupes d'usage signifiants mais aussi sur l'idée d'apprentissage supervisé dans lequel l'algorithme apprend en permanence sur la base des événements récents.

La classification utilise aussi bien des méthodes de régressions linéaires / classification "classique" (KNN, SVM, Markov process) que des réseaux neuronaux récurrents alliés à du "vector embedding" pour arriver à une sélection optimale.

### Mise en œuvre de l'invention

L'utilisateur va utiliser son équipement informatique de manière transparente.

La figure 2 représente une vue schématique de l'architecture fonctionnelle de l'invention.

De manière connue, le processeur d'un équipement informatique possède au moins deux modes de fonctionnement, dont un mode dit superviseur ou mode noyau (30) qui n'impose pas de restrictions sur les instructions exécutées, et un mode dit utilisateur (40) qui limite ce que peuvent faire les instructions, et quand le système d'exploitation (31) met en œuvre cette distinction en faisant fonctionner les autres programmes en mode utilisateur et en se réservant le mode superviseur, on dit que les programmes ainsi restreints font partie de l'espace utilisateur (40) (en anglais, userspace).

L'application va de manière classique envoyer au noyau de système d'exploitation (30) (« Kernel ») un appel système relatif à la gestion du système de fichiers (« filesystem ») (par exemple: read, write, open, make dir..).

Dans la solution proposée par l'invention, on utilise la librairie FUSE/Dokany (35) pour "ramener" ces appels dans l'application USERSPACE (40) et donc utiliser un programme (41) pour y répondre.

L'USERSPACE (40) ou « système de fichiers en espace utilisateur» est un espace permettant à un utilisateur (42) sans privilèges particuliers d'accéder à un système de fichiers (43) sans qu'il soit nécessaire de modifier les sources du noyau, via une application désignée usuellement par le nom FUSE.

Fuse a pour effet de relayer ces appels et de renvoyer les réponses. Une bibliothèque "binding" est utilisée pour communiquer avec un programme écrit en RUST pour l'exécution du code informatique destiné à la mise en œuvre de l'invention.

Le programme principal a pour action de prendre ces appels et d'exécuter des actions pour y répondre. Pour cela il dispose de deux zones de mémoires.
a) Un cache (44), qui permet de stocker les fichiers en eux-mêmes.
b) Un "metacache" (45) qui stocke à la fois les meta-data des fichiers, leurs liens physiques (cloud (46)/stockage local (47)), leur statut de synchronisation, leur historique, leur note d'importance, sous la forme d'une base de données SQLite.

Pour chaque appel, le processus principal va donc effectuer une action dans ces zones de stockages puis renvoyer une réponse à FUSE (35). Il est à noter que cette réponse peut être sujette à un "signal" renvoyé par un processus léger (« thread ») de traitement (48 à 51).

La seconde partie du programme s'exécute en arrière-plan (52) (programme de type "daemon") pour effectuer une série de taches asynchrones, soit en réaction à une action du VFS qui peut lui envoyer des signaux via un channel, soit de manière périodique. Cette organisation permet de répondre à deux problématiques:
a) Eviter d'être "bloquant" vis à vis de l'interface utilisateur lors de taches longues à effectuer (ex: upload) en effectuant ces taches dans un processus léger (thread)
b) Mettre en place une série de taches périodiques. C'est par exemple dans un processus léger (thread) du daemon que se fait la notation des fichiers par l'algorithme et la suppression / téléchargement automatique des fichiers prédits.

Il est à noter que ce programme « daemon » (52) va aussi pouvoir modifier les fichiers du cache (44) (par exemple lors de téléchargement) et du metacache (45) (par exemple pour changer le statut de synchronisation d'un fichier).

Si ces files d'exécution (48 à 52 (« threads ») demandent un accès au nuage (46) (« cloud »), une connection HTTPS est mise en place, que ce soit pour des taches de chargement « upload » ou « download ». Les identifiants spécifiques à l'utilisateur sont stockés par le programme ce qui permet d'utiliser les routes d'api HTTPS pour envoyer des requêtes au fournisseur de cloud (BackBlaze). Ces taches sont divisées en deux threadpools, une à usage général et une autre dédié aux téléchargements d'urgence, dans le cas de "cache miss".

### ALGORITHME DE PREDICTION

L'algorithme de prédiction est constitué de trois briques techniques principales.

### - Pré-Traitement

Le but des étapes de pré-traitement est de formater des données afin de pouvoir y appliquer des méthodes de « deep-learning ». Un certain nombre des données sont nommées "continues" car elles évoluent dans un espace continu ou pseudo continu ce qui permet de facilement les interpréter sous forme de vecteurs. Ce n'est pas le cas de données comme les extensions fichier, ou bien les chemins d'accès des fichiers. Pour employer ces metadatas, on développe des méthodes de "vector embedding". Ces méthodes ont pour but de décrire ces paramètres dans un espace vectoriel continu. Pour cela on utilise dans cette implémentation du clustering de Markof pour représenter les distances fichier de manière continue, et du "vector embedding" pour dégager un espace vectoriel où on peut interpréter les distances des fichiers.

### - Analyse

L'analyse repose sur un modèle de deep-learning implémenté en TENSORFLOW, pré-entrainé sur des sets génériques qui, en partant du vecteur de description agrégé des fichiers, permet de prédire sur une période donnée la probabilité d'utilisation d'un fichier. Ce modèle est continuellement ré-entrainé sur les données de l'utilisateur.

### - Post-traitement

Le post traitement consiste à choisir un set de fichier qui va donner la satisfaction maximale. Cette satisfaction est mesurée selon deux métriques. D'une part la probabilité d'un défaut de cache sur la période à venir, mais aussi la consommation de bande passante (pour des raisons économiques). Dans la pratique, cela signifie utiliser un algorithme du sac-à-dos dans lequel l'espace disponible est celui du disque local, le poids celui des fichiers, et le critère d'utilité est la note donnée par le modèle neuronal pondéré par un facteur relatif à la présence précédente du fichier (pour diminuer l'usage de bande passante).

Ces méthodes s'exécutent de manière asynchrone.

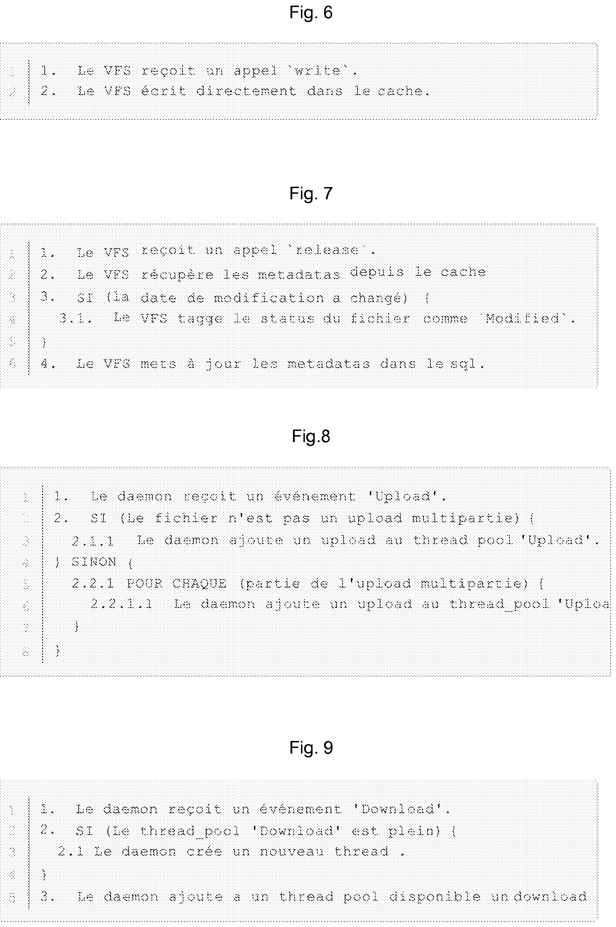

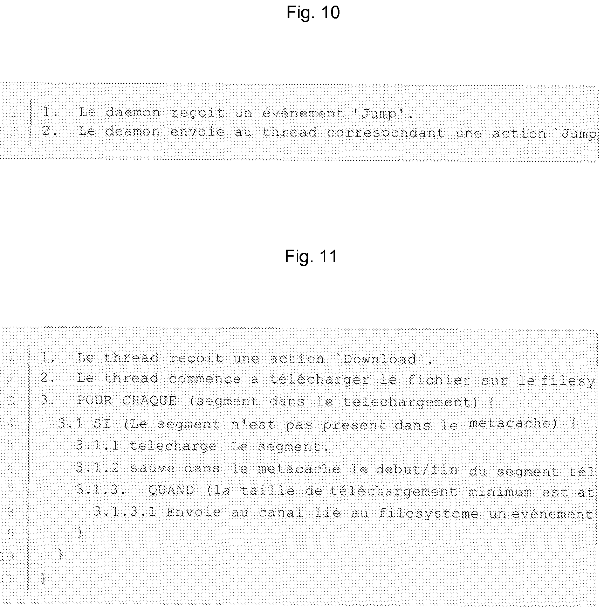

Les figures 3 à 11 présentent des exemples de processus de traitement (thread) :
- Création d'un fichier par un utilisateur (figure 3)
- Ouverture d'un fichier par un utilisateur (figure 4)
- Lecture d'un fichier par un utilisateur (figure 5)
- Ecriture d'un fichier par un utilisateur (figure 6)
- Fermeture d'un fichier par un utilisateur (figure 7)
- Réception par le daemon d'un événement de type « upload » (figure 8)
- Réception par le daemon d'un événement de type « download » (figure 9)
- Réception par le daemon d'un événement de type « Jump» (figure 10)
- Réception par l'ensemble de processus léger de téléchargement d'un événement de type « download » (figure 11).

## Revendications

1. Procédé de gestion du système de fichiers d'un terminal informatique (10) disposant d'une mémoire locale (12), connecté à un réseau comprenant au moins un équipement de stockage distant (20), comportant des étapes de calcul périodique de l'adressage local ou distant d'un fichier numérique à enregistrer, à lire ou à modifier en fonction d'une loi recalculée périodiquement **caractérisé en ce que**
• Ladite étape de calcul de l'adressage est fonction de métadonnées présentes dans ledit fichier numérique à traiter, de l'historique d'accès dudit fichier à traiter et de l'arborescence locale des fichiers,
• Ladite loi est déterminée à partir d'une loi de référence, recalculée en tâche de fond, par des traitements fonction des usages de l'utilisateur, pour commander la recopie d'un fichier distant sur la mémoire locale avant la requête d'accès audit fichier, et à effacer les fichiers locaux dont ladite loi détermine un indicateur d'utilisation inférieur à une valeur seuil,
• Ladite loi de commande étant déterminée pour minimiser le volume des données transférées entre la mémoire locale et la mémoire distante et à minimiser le défaut de cache local,
• Et **en ce que** ledit procédé comporte des étapes exécutées en tâche de fond de recopie des fichiers enregistrés locaux sur l'équipement de stockage distant,
• Et **en ce que** les commandes de modification d'un fichier distant entraîne le téléchargement de la partie dudit fichier à modifier sur la mémoire locale, à déverrouiller la partie du fichier à modifier sur la mémoire locale, à modifier localement ladite partie du fichier à modifier, à verrouiller ladite partie du fichier et à resynchroniser le fichier distant avec le fichier local.

2. Procédé de gestion du système de fichiers d'un terminal informatique selon la revendication 1 **caractérisé en ce que** ladite loi de commande en fonction des usages de l'utilisateur prend en compte un critère relatif à l'accessibilité dudit fichier hors connexion.

3. Procédé de gestion du système de fichiers d'un terminal informatique selon la revendication 1 **caractérisé en ce que** l'arborescences des fichiers locaux et distant et la table d'indexation de la totalité des fichiers locaux et distant est enregistrée dans la mémoire locale et **en ce que** le système d'exploitation comporte des moyens de visualisation transparent de l'arborescence.

4. Procédé de gestion du système de fichiers d'un terminal informatique selon la revendication 1 **caractérisé en ce qu'**il comporte des prétraitements en tâche de fond du fichier de log pour regrouper les informations de log selon un critère de proximité (vector embedding).

5. Procédé de gestion du système de fichiers d'un terminal informatique selon la revendication 1 **caractérisé en ce qu'**il comporte des prétraitements en tâche de fond de regroupement de fichiers sur un même espace de stockage en fonction d'un indicateur de distance vectorielle entre lesdits fichiers.

6. Procédé de gestion du système de fichiers d'un terminal informatique selon la revendication 4 ou 5 **caractérisé en ce que** lesdits prétraitements sont réalisés au moment du log, entraînement d'un réseau de neurone sur ces logs, et à partir d'un réseau pré-entraîné pour calculer un indicateur numérique correspondant à la probabilité d'utilisation future pour chacun des fichiers.

7. Procédé de gestion du système de fichiers d'un terminal informatique selon la revendication précédente **caractérisé en ce que** l'adressage d'un fichier est déterminé par application d'un algorithme d'optimisation combinatoire appliqué audit indicateur numérique de probabilité d'utilisation et des caractéristiques de la mémoire locale et de la communication réseau.

8. Equipement informatique comprenant un processeur (11) et une ou plusieurs mémoires locales (12), par exemple une mémoire flash ou un disque dur, associé à un circuit réseau (13) ainsi qu'une mémoire pour l'enregistrement d'un code commandant la gestion du système de fichiers conformément au procédé conforme à la revendication 1.

9. Système constitué par au moins un serveur et au moins un équipement informatique conforme à la revendication 8.

10. Support de mémoire permanente comprenant un code informatique qui, lorsqu'il est exécuté par un processeur, conduit celui-ci à mettre en oeuvre la revendication 1.

11. Procédé de gestion du système de fichiers d'un terminal informatique selon la revendication 7 **caractérisé en ce qu'**une version dégradée constituée par des versions compressées ou retaillées des fichier absent sur la mémoire locale sont conservées en mémoire locale, pour permette un usage minimum.

## Patentansprüche

1. Verfahren zum Verwalten des Dateisystems eines Computerterminals (10) mit einem lokalen Speicher (12), das mit einem Netzwerk verbunden ist, das mindestens eine externe Speichervorrichtung (20) aufweist, umfasst Schritte der regelmäßigen Berechnung der lokalen oder externen Adressierung einer digitalen Datei, die in Abhängigkeit von einem regelmäßig neu berechneten Gesetz aufgezeichnet, gelesen oder geändert werden soll, **dadurch gekennzeichnet, dass**
• der Schritt der Berechnung der Adressierung in Abhängigkeit von Metadaten der Zugriffshistorie der zu verarbeitenden Datei und der lokalen Dateibaumstruktur erfolgt, die in der zu verarbeitenden digitalen Datei vorhanden sind,
• das Gesetz aus einem Referenzgesetz bestimmt wird, das im Hintergrund neu berechnet wird, indem es in Abhängigkeit der Verwendungen des Benutzers verarbeitet wird, um die Zurückkopie einer externen Datei in den lokalen Speicher vor der Zugriffsanforderung auf die Datei zu befehlen und um lokale Dateien zu löschen, für die das Gesetz einen Nutzungsindikator unterhalb eines Schwellenwerts bestimmt,
• wobei das Befehlsgesetz so bestimmt wird, dass die zwischen lokalem und externem Speicher übertragene Datenmenge minimiert wird und der Ausfall des lokalen Pufferspeichers minimiert wird,
• und dadurch, dass das Verfahren die Hintergrundschritte der Zurückkopie der lokal gespeicherten Dateien in das externe Speichergerät umfasst,
• und dadurch, dass Befehle zur Änderung einer entfernten Datei bewirken, dass der Teil der zu ändernden Datei in den lokalen Speicher heruntergeladen wird, dass der Teil der zu ändernden Datei im lokalen Speicher entsperrt wird, dass der Teil der zu ändernden Datei lokal geändert wird, dass der Teil der Datei gesperrt wird und dass die externe Datei mit der lokalen Datei erneut synchronisiert wird.

2. Verfahren zum Verwalten des Dateisystems eines Computerterminals nach Anspruch 1, **dadurch gekennzeichnet, dass** das Befehlsgesetz in Abhängigkeit der Verwendungen des Benutzers ein Kriterium berücksichtigt, das sich auf die Offline-Zugänglichkeit der Datei bezieht.

3. Verfahren zum Verwalten des Dateisystems eines Computerterminals nach Anspruch 1, **dadurch gekennzeichnet, dass** die Baumstruktur der lokalen und externen Dateien und die Indizierungstabelle aller lokalen und externen Dateien im lokalen Speicher aufgezeichnet wird und dass das Betriebssystem Mittel zur transparenten Visualisierung der Baumstruktur umfasst.

4. Verfahren zum Verwalten des Dateisystems eines Computerterminals nach Anspruch 1, **dadurch gekennzeichnet, dass** es eine Hintergrundvorverarbeitung der Protokolldatei umfasst, um die Protokollinformationen nach einem Proximitätskriterium zusammenzufassen (Vector Embedding).

5. Verfahren zum Verwalteng des Dateisystems eines Computerterminals nach Anspruch 1, **dadurch gekennzeichnet, dass** es eine Hintergrundvorverarbeitung zur Gruppierung von Dateien auf demselben Speicherplatz in Abhängigkeit von einem Indikator für den Vektorabstand zwischen den Dateien umfasst.

6. Verfahren zum Verwalten des Dateisystems eines Computerterminals nach Anspruch 4 oder 5, **dadurch gekennzeichnet, dass** die Vorverarbeitung zum Zeitpunkt der Protokollierung durchgeführt wird, wobei ein neuronales Netz auf diese Protokolle trainiert wird und aus einem vortrainierten Netz ein numerischer Indikator berechnet wird, der der Wahrscheinlichkeit einer zukünftigen Nutzung für jede der Dateien entspricht.

7. Verfahren zum Verwalten des Dateisystems eines Computerterminals nach dem vorhergehenden Anspruch, **dadurch gekennzeichnet, dass** die Adressierung einer Datei durch Anwendung eines kombinatorischen Optimierungsalgorithmus bestimmt wird, der auf den digitalen Indikator der Nutzungswahrscheinlichkeit und der Eigenschaften des lokalen Speichers und der Netzkommunikation angewendet wird.

8. Computerausrüstung, aufweisend einen Prozessor (11) und einen oder mehrere lokalen Speicher (12), beispielsweise einen Flash-Speicher oder eine Festplatte, die mit einer Netzwerkschaltung (13) zugeordnet sind, sowie einen Speicher zum Aufzeichnen eines Codes, der die Verwaltung des Dateisystems gemäß dem Verfahren nach Anspruch 1 befiehlt.

9. System mitmindestens einem Server und mit mindestens einer Computerausrüstung nach Anspruch 8.

10. Permanentes Speichermedium, das einen Computercode aufweist, der, wenn er von einem Prozessor ausgeführt wird, den Prozessor veranlasst, Anspruch 1 durchzuführen.

11. Verfahren zum Verwalten des Dateisystems eines Computerterminals nach Anspruch 7, **dadurch gekennzeichnet, dass** eine degradierte Version, die aus komprimierten oder umgeänderten Versionen der im lokalen Speicher nicht vorhandenen Dateien besteht, im lokalen Speicher erhalten wird, um eine minimale Verwendung zu ermöglichen.

## Claims

1. Method for managing the file system of a computer terminal (10) which has a local memory (12) and is connected to a network comprising at least one remote storage device (20), the method comprising the steps of periodically calculating the local or remote addressing of a digital file to be saved, read, or modified according to a periodically recalculated rule, **characterized in that**
• said addressing calculation step depends on metadata present in said digital file to be processed, on the access history of said file to be processed and on the local tree structure of the files,
• said rule is determined from a reference rule, recalculated as a background task, by processing depending on the uses of the user, to control the copying of a remote file to the local memory before the request for access to the file, and to erase the local files for which said rule determines a use indicator below a threshold value,
• said control rule being determined to minimize the volume of data transferred between the local memory and the remote memory and to minimize the local cache miss,
• and **in that** said method comprises the steps, executed as a background task, of copying the local saved files onto the remote storage device,
• and **in that** the controls for modifying a remote file cause the downloading of the part of said file to be modified to the local memory, to unlock the part of the file to be modified on the local memory, to locally modify said part of the file to be modified, to lock said part of the file and to resynchronize the remote file with the local file.

2. Method for managing the file system of a computer terminal according to claim 1, **characterized in that** said control rule depending on the uses of the user takes into account a criterion relating to the offline accessibility of said file.

3. Method for managing the file system of a computer terminal according to claim 1, **characterized in that** the tree structures of the local and remote files and the indexing table of all of the local and remote files is recorded in the local memory, and **in that** the operating system comprises means for transparently displaying the tree structure.

4. Method for managing the file system of a computer terminal according to claim 1, **characterized in that** it comprises background preprocessing of the log file to group together the log information according to a proximity criterion (vector embedding).

5. Method for managing the file system of a computer terminal according to claim 1, **characterized in that** it comprises background preprocessing of grouping files in the same storage space depending on a vector distance indicator between said files.

6. Method for managing the file system of a computer terminal according to either claim 4 or claim 5, **characterized in that** said preprocessing is carried out at the time of the log, training of a neural network on said logs, and from a network pre-trained to calculate a digital indicator corresponding to the probability of future use for each of the files.

7. Method for managing the file system of a computer terminal according to the preceding claim, **characterized in that** the addressing of a file is determined by applying a combinatorial optimization algorithm applied to said digital indicator of probability of use and characteristics of local memory and network communication.

8. Computer device comprising a processor (11) and one or more local memories (12), for example a flash memory or a hard drive, connected to a network circuit (13) as well as a memory for saving a code controlling the management of the file system according to the method according to claim 1.

9. System consisting of at least one server and at least one computer device according to claim 8.

10. Permanent memory medium comprising a computer code which, when executed by a processor, causes said permanent memory medium to implement claim 1.

11. Method for managing the file system of a computer terminal according to claim 7, **characterized in that** a degraded version consisting of compressed or resized versions of files absent from the local memory are kept in local memory, to allow minimum use.
